# DEMANDE DE BREVET EUROPEEN

(11) **EP 3 845 720 A1**
(43) Date de publication de la demande: **07.07.2021**
(21) Numéro de dépôt: 21150108.5
(22) Date de dépôt: 04.01.2021
(51) Int. Cl.: E04F 11/18, F16B 2/18, F16B 7/04, E05D 11/10

(54) **MONTANT RABATTABLE POUR GARDE-CORPS**

(30) Priorité: 06.01.2020 FR 2000063
(71) Demandeur: DANI ALU, 69280 Sainte Consorce (FR)
(72) Inventeur: DUPLAT, Bruno, 69340 FRANCHEVILLE (FR)
(74) Mandataire: Salles, Maximin

(57) **Abrégé**

Montant rabattable (1) pour garde-corps, comprenant une section supérieure de montant (3) et une section inférieure de montant (2) raccordées bout à bout par un système d'articulation (4) comportant un charnon mobile (43) à l'intérieur duquel est fixée la section supérieure de montant, et un charnon fixe (42) à l'intérieur duquel est fixée la section inférieure de montant, où le charnon mobile (43) est montée mobile en pivotement sur le charnon fixe ;
et un système de verrouillage à levier (5) comprenant :
- un verrou (51) prévu sur l'un des charnons,
- une poignée (52) montée pivotante sur l'autre des charnons,
- un pêne (53) articulé sur la poignée et conformé pour être, par une manœuvre de la poignée, soit en prise avec le verrou en configuration verrouillée soit libéré du verrou en configuration déverrouillée.

## Description

L'invention se rapporte à un montant rabattable pour garde-corps, ainsi qu'à un procédé de modification d'un montant pour garde-corps consistant à modifier un montant non rabattable pour en faire un montant rabattable.

Un garde-corps s'étend généralement le long des bordures de terrasse ou de toiture, ou le long d'une zone d'accès limité, et comprend une succession de montants fixés sur un ouvrage au moyen de sabots. Il est également d'usage de prévoir entre les montants une ou plusieurs lisses, autrement appelées barres ou barreaux, bien évidement prévues pour former une barrière assurant la protection afin d'éviter toute chute accidentelle ou accès accidentel à une zone dangereuse.

De manière connue, les montants peuvent être rabattables, c'est-à-dire qu'ils peuvent être abaissés. Aussi, des tels montants sont déployés (généralement à la verticale) uniquement lors d'opérations sur zone, et les montants sont ensuite rabattus à la fin des opérations, essentiellement pour des raisons esthétiques afin de dissimuler du regard le garde-corps lorsque par exemple posé en haut d'un bâtiment.

Cette fonction de pouvoir rabattre les montants est également pratique quand il y a un problème d'encombrement et que le garde-corps doit être rabattu pour laisser passer d'autres éléments.

Cependant, les solutions actuelles de montant rabattable sont peu satisfaisantes, car elles font généralement appel à une articulation pivotante du montant au niveau du sabot, ce qui impose de devoir rabattre le montant sur toute sa hauteur, autrement dit de rabattre le garde-corps sur toute sa hauteur.

Dans certains cas, l'espace disponible pour le rabattement du garde-corps fait défaut, et il existe donc un besoin de pouvoir rabattre une partie seulement du montant (ou du garde-corps).

Un but de l'invention est de proposer un montant rabattable dont la structure est adaptée pour pouvoir choisir la hauteur du point d'articulation sur le montant, et ainsi de pouvoir limiter l'amplitude de rabattement selon l'espace disponible.

Un autre but de l'invention est de fournir une solution de montant rabattable qui permet son rabattement de manière simple et sécurisée.

A cette fin, l'invention propose un montant rabattable pour garde-corps, un tel montant rabattable comprenant une section supérieure de montant et une section inférieure de montant raccordées bout à bout par un système d'articulation pour permettre un rabattement par pivotement de la section supérieure de montant relativement à la section inférieure de montant ;
ce système d'articulation comportant :
- un charnon mobile présentant une cavité supérieure à l'intérieur de laquelle est fixée la section supérieure de montant,
- un charnon fixe présentant une cavité inférieure à l'intérieur de laquelle est fixée la section inférieure de montant, où le charnon mobile est montée mobile en pivotement sur le charnon fixe au moyen d'un organe de liaison définissant un axe de pivotement ;
- un système de verrouillage à levier configurable entre une configuration verrouillée interdisant un pivotement du charnon mobile afin de maintenir alignées la section supérieure de montant et la section inférieure de montant selon un axe de montant, et une configuration déverrouillée autorisant un pivotement du charnon mobile relativement au charnon fixe afin de libérer un pivotement de la section supérieure de montant ;
ce système de verrouillage à levier comprenant :
- un verrou prévu sur l'un du charnon mobile et du charnon fixe,
- une poignée montée pivotante sur l'autre du charnon mobile et du charnon fixe selon un axe principal,
- un pêne articulé sur la poignée selon un axe secondaire et conformé pour être, par une manœuvre de la poignée, soit en prise avec le verrou en configuration verrouillée soit libéré du verrou en configuration déverrouillée.

Ainsi, l'invention propose d'introduire deux sections de montant à l'intérieur des cavités de deux charnons articulés ensemble pour former une charnière, ce qui permet d'assurer la fonction de rabattement au moyen de ces deux charnons sans avoir à modifier les sections de montant, ce qui permet de positionner le système d'articulation à la hauteur voulue, sans difficulté. Par ailleurs, le système de verrouillage à levier procure un verrouillage externe, sans avoir à nouveau à modifier les sections de montant, ce qui favorise une utilisation aisée et rapide.

Selon une caractéristique, le système d'articulation présente un plan médian s'étendant parallèlement à l'axe de pivotement et incluant l'axe de montant, avec de part et d'autre du plan médian un côté avant et un côté arrière, et l'axe de pivotement est situé sur le côté avant du plan médian tandis que le verrou est situé sur le côté arrière.

Ainsi, la section supérieure de montant peut aisément basculer vers l'avant, en considérant que le côté avant est le côté où se situe l'ouvrage et le côté arrière est le côté où se situe la zone de danger et en particulier le vide dans le cas d'un ouvrage en hauteur.

Selon une possibilité, le verrou comprend une encoche formée sur l'un du charnon mobile et du charnon fixe.

Selon une autre possibilité, l'axe principal est situé sur le côté arrière.

Dans une réalisation particulière, la poignée comprend deux bras latéraux s'étendant de part et d'autre de l'autre du charnon mobile et du charnon fixe et présentant :
- des extrémités arrière respectives montées pivotantes sur l'autre du charnon mobile et du charnon fixe selon l'axe principal, et
- des extrémités avant respectives jointes par une barre de manipulation située sur le côté avant en regard de l'autre du charnon mobile et du charnon fixe.

Ainsi, un opérateur situé sur l'avant peut aisément agir sur la barre de manipulation, également disposée sur l'avant, sans prendre de risque, pour manipuler la poignée et ainsi opérer un déverrouillage ou un verrouillage du système de verrouillage à levier. Selon une autre possibilité, le pêne est formé d'une pièce en forme générale de « U » comprenant deux tiges latérales s'étendant de part et d'autre de l'autre du charnon mobile et du charnon fixe et présentant :
- des premières extrémités respectives montées pivotantes sur les bras latéraux respectifs de la poignée selon l'axe secondaire, et
- des secondes extrémités respectives jointes par une tige de verrouillage située sur le côté arrière et propre à venir en prise avec le verrou.

Selon une possibilité, l'axe principal et l'axe secondaire sont parallèles à l'axe de pivotement.

Avantageusement, la section supérieure de montant est fixée par serrage dans la cavité supérieure, par exemple au moyen d'au moins une vis de pression traversant le charnon mobile pour presser la section supérieure de montant.

Ainsi, la fixation de la section supérieure de montant n'appelle pas de modification spéciale sur celle-ci, car il suffit de la serrer à l'intérieur de la cavité supérieure.

Tout aussi avantageusement, la section inférieure de montant est fixée par serrage dans la cavité inférieure, par exemple au moyen d'au moins une vis de pression traversant le charnon fixe pour presser la section inférieure de montant.

Ainsi, la fixation de cette section inférieure de montant n'appelle pas de modification spéciale sur celle-ci, car il suffit de la serrer à l'intérieur de la cavité inférieure.

L'invention se rapporte également à un procédé de modification d'un montant pour garde-corps consistant à modifier un montant non rabattable pour en faire un montant rabattable tel que décrit ci-dessus, un tel procédé de modification utilisant un système d'articulation comportant :
- un charnon mobile présentant une cavité supérieure,
- un charnon fixe présentant une cavité inférieure, où le charnon mobile est montée mobile en pivotement sur le charnon fixe au moyen d'un organe de liaison définissant un axe de montant ;
- un système de verrouillage à levier configurable entre une configuration verrouillée interdisant un pivotement du charnon mobile, et une configuration déverrouillée autorisant un pivotement du charnon mobile relativement au charnon fixe ;
et ledit système de verrouillage à levier comprenant :
- un verrou prévu sur l'un du charnon mobile et du charnon fixe,
- une poignée montée pivotante sur l'autre du charnon mobile et du charnon fixe selon un axe principal,
- un pêne articulé sur la poignée selon un axe secondaire et conformé pour, par une manœuvre de la poignée, être en prise avec le verrou en configuration déverrouillée ou être libéré du verrou en configuration déverrouillée ;
le procédé de modification comprenant les étape suivantes :
- sectionner le montant non rabattable à une hauteur voulue, afin de séparer une section inférieure de montant d'une section supérieure de montant ;
- fixer une extrémité supérieure sectionnée de la section inférieure de montant à l'intérieur de la cavité inférieure du charnon fixe ;
- fixer une extrémité inférieure sectionnée de la section supérieure de montant à l'intérieur de la cavité supérieure du charnon mobile

Ainsi, il suffit simplement de sectionner le montant non rabattable à la hauteur voulue, selon l'espace disponible pour rabattre le montant, et d'intercaler le système d'articulation entre les deux sections de montant.

Dans une réalisation avantageuse, l'extrémité supérieure sectionnée de la section inférieure de montant est fixée par serrage à l'intérieur de la cavité inférieure, par exemple au moyen d'au moins une vis de pression traversant le charnon fixe pour presser la section inférieure de montant.

Tout aussi avantageusement, l'extrémité inférieure sectionnée de la section supérieure de montant est fixée par serrage à l'intérieur de la cavité supérieure, par exemple au moyen d'au moins une vis de pression traversant le charnon mobile pour presser la section supérieure de montant.

D'autres caractéristiques et avantages de la présente invention apparaîtront à la lecture de la description détaillée ci-après, d'un exemple de mise en oeuvre non limitatif, faite en référence aux figures annexées dans lesquelles :
[Fig 1] est une vue schématique en perspective d'un montant rabattable selon l'invention, avec son système de verrouillage à levier en configuration verrouillée pour maintenir alignées sa section supérieure de montant et sa section inférieure de montant ;
[Fig 2] est une vue schématique en perspective du montant rabattable de la Figure 1, après déverrouillage du système de verrouillage, la section supérieure de montant et la section inférieure de montant étant encore alignés ;
[Fig 3] est une vue schématique en perspective du montant rabattable de la Figure 2, après avoir commencé à pivoter la section supérieure de montant pour son rabattement ;
[Fig 4] est une vue schématique en perspective du montant rabattable de la Figure 3, après avoir fini de pivoter la section supérieure de montant pour son rabattement complet ;
[Fig 5] est une vue schématique de côté des étapes du procédé de modification d'un montant pour garde-corps consistant à modifier un montant non rabattable (à gauche) pour en faire un montant rabattable (à droite) comme illustré sur les Figures 1 à 4.

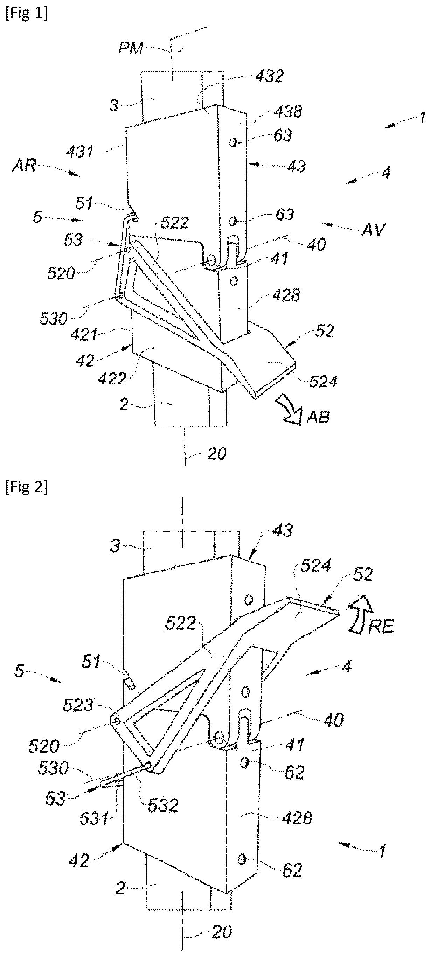

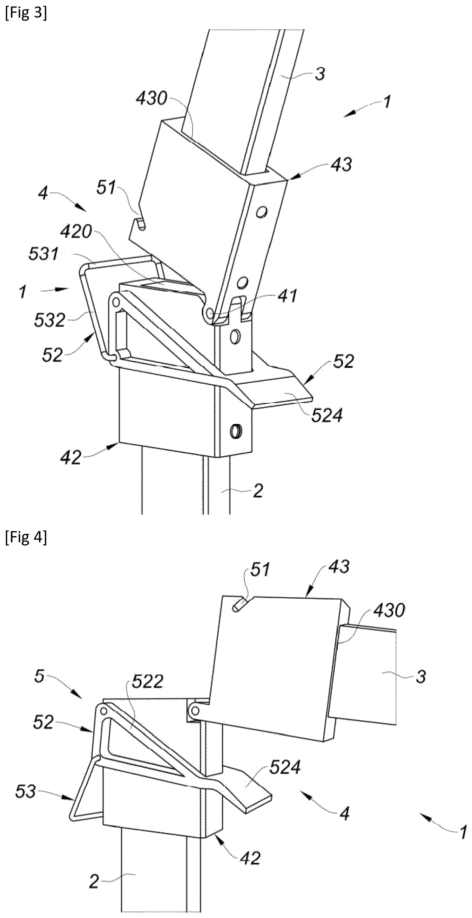

En référence aux Figures 1 à 4, un montant rabattable 1 pour garde-corps, selon l'invention, comprend :
- une section inférieure de montant 2 prévue pour être ancrée au sol ou sur un ouvrage, par exemple au moyen d'un sabot, et qui s'étend selon un axe de montant 20 qui est généralement vertical ;
- une section supérieure de montant 3 qui constitue la partie rabattable du montant rabattable 1 ;
- un système d'articulation 4 qui raccorde bout à bout la section inférieure de montant 2 et la section supérieure de montant 3 pour permettre un rabattement par pivotement de la section supérieure de montant 3 relativement à la section inférieure de montant 2 qui reste quant à elle fixe.

La section inférieure de montant 2 et la section supérieure de montant 3 sont des sections d'un même profilé, et par exemple un profilé tubulaire. Dans l'exemple illustré, ce profilé est de section rectangulaire. Il est à noter que chaque section de montant 2, 3 peut être rectiligne ou incurvée.

Ce système d'articulation 4 comporte :
- un charnon mobile 43 présentant une cavité supérieure 430 (tournée vers le haut) à l'intérieur de laquelle est fixée la section supérieure de montant 3 ; et
- un charnon fixe 42 présentant une cavité inférieure 420 (tournée vers le bas) à l'intérieur de laquelle est fixée la section inférieure de montant 2, où le charnon mobile 43 est montée mobile en pivotement sur le charnon fixe 42 au moyen d'un organe de liaison 41 définissant un axe de pivotement 40.

Le charnon fixe 42 et le charnon mobile 43 peuvent être tubulaires, de sorte que leurs cavités 420, 430 respectives les traversent de part en part selon l'axe de montant 20.

Le système d'articulation 4 présente un plan médian PM s'étendant parallèlement à l'axe de pivotement 40 et incluant l'axe de montant 20, avec de part et d'autre du plan médian PM un côté avant AV (situé du côté de l'ouvrage ou zone où se situe la personne) et un côté arrière AR (situé du côté de l'ouvrage ou de la zone où se situe le danger et qui est interdit d'accès à la personne au moyen du garde-corps).

Le charnon fixe 42 présente une face avant 428 située sur le côté avant AV et une face arrière 421 opposée située sur le côté arrière AR, où la face avant 428 et la face arrière 421 sont reliées par deux faces latérales 422 opposées.

Le charnon mobile 43 présente une face avant 438 située sur le côté avant AV et une face arrière 431 opposée située sur le côté arrière AR, où la face avant 438 et la face arrière 431 sont reliées par deux faces latérales 432 opposées.

La section supérieure de montant 3 est fixée par serrage dans la cavité supérieure 430 au moyen de vis de pression 63 traversant le charnon mobile 43 pour presser la section supérieure de montant 3 à l'intérieur de cette cavité supérieure 430. Dans l'exemple illustré, les vis de pression 63 sont au nombre de deux et sont prévus sur la face avant 438 du charnon mobile 43.

La section inférieure de montant 2 est fixée par serrage dans la cavité inférieure 420 au moyen de vis de pression 62 traversant le charnon fixe 42 pour presser la section inférieure de montant 2 à l'intérieur de cette cavité inférieure 420. Dans l'exemple illustré, les vis de pression 62 sont au nombre de deux et sont prévus sur la face avant 428 du charnon fixe 42.

L'axe de pivotement 40 est situé sur le côté avant AV du plan médian PM et le charnon mobile 43 pivote ou bascule vers l'avant.

Ce système d'articulation 4 comporte en outre un système de verrouillage à levier 5 qui est configurable réversiblement entre :
- une configuration verrouillée (illustrée sur la Figure 1) interdisant un pivotement du charnon mobile 43 afin de maintenir alignées la section supérieure de montant 3 et la section inférieure de montant 2 selon l'axe de montant 20, ce qui correspond à une configuration dans laquelle le montant rabattable 1 est non rabattu et ne peut pas être rabattu, de sorte que ce montant rabattable 1 procure ses fonctions de sécurisation et de protection ; et
- une configuration déverrouillée (illustrée sur les Figures 2 à 4) autorisant un pivotement du charnon mobile 43 relativement au charnon fixe 42, afin de libérer un pivotement de la section supérieure de montant 3, ce qui correspond à une configuration dans laquelle le montant rabattable 1 peut être rabattu, afin par exemple de répondre à des exigences esthétiques ou de permettre le passage d'un élément pardessus le garde-corps.

Ce système de verrouillage à levier 5 est monté sur les charnons 42, 43, et il comprend :
- un verrou 51 réalisé sous la forme d'une encoche prévue sur le charnon mobile 43, et plus spécifiquement prévue sur la face arrière 431 du charnon mobile 43, du côté arrière AR ;
- une poignée 52 montée pivotante sur le charnon fixe 42 selon un axe principal 520 parallèle à l'axe de pivotement 40, cet axe principal 520 étant situé sur le côté arrière AR, en-dessous de l'encoche 51 ;
- un pêne 53 articulé sur la poignée 52 selon un axe secondaire 530, parallèle à l'axe de pivotement 40, et conformé pour être, par une manœuvre de la poignée 52, soit en prise avec l'encoche formant le verrou 51 en configuration verrouillée (comme visible sur la Figure 1) soit libéré de l'encoche formant le verrou 51 en configuration déverrouillée (comme visible sur les Figures 2 à 4).

La poignée 52 est plus précisément montée pivotante sur les faces latérales 422 du charnon fixe 42, et cette poignée 52 comprend deux bras latéraux 522 s'étendant de part et d'autre de l'autre du charnon fixe 42 (en regard des faces latérales 422 respectives) et présentant :
- des extrémités arrière 523 respectives montées pivotantes sur les faces latérales 422 respectives du charnon fixe 42 selon l'axe principal 520, et
- des extrémités avant respectives jointes par une barre de manipulation 524 située sur le côté avant AV en regard de la face avant 428 du charnon fixe 42.

Le pêne 53 est formé d'une pièce en forme générale de « U » comprenant deux tiges latérales 532 s'étendant de part et d'autre du charnon fixe 42 et présentant :
- des premières extrémités respectives montées pivotantes sur les bras latéraux 522 respectifs de la poignée 52 selon l'axe secondaire 530, et
- des secondes extrémités respectives jointes par une tige de verrouillage 531 située sur le côté arrière AR en regard de la face arrière 421 du charnon fixe 42 ou de l'encoche formant le verrou 51 selon sa position, où cette tige de verrouillage 531 est prévue pour être en prise avec l'encoche formant le verrou 51 en configuration verrouillée.

Ainsi, en agissant sur la poignée 52 et plus précisément sur la barre de manipulation 524, un opérateur fait pivoter la poignée 52 et peut :
- introduire la tige de verrouillage 531 dans l'encoche formant le verrou 51 et abaisser la poignée 52 vers le bas (comme schématisé par la flèche AB sur la Figure 1) pour verrouiller et bloquer la tige de verrouillage 531 du pêne 53 dans l'encoche formant le verrou 51, et ainsi se placer en configuration verrouillée ;
- relever la poignée 52 vers le haut (comme schématisé par la flèche RE sur la Figure 2) pour sortir la tige de verrouillage 531 du pêne 53 hors de l'encoche formant le verrou 51, et ainsi libérer le pêne 53 et se placer en configuration déverrouillée.

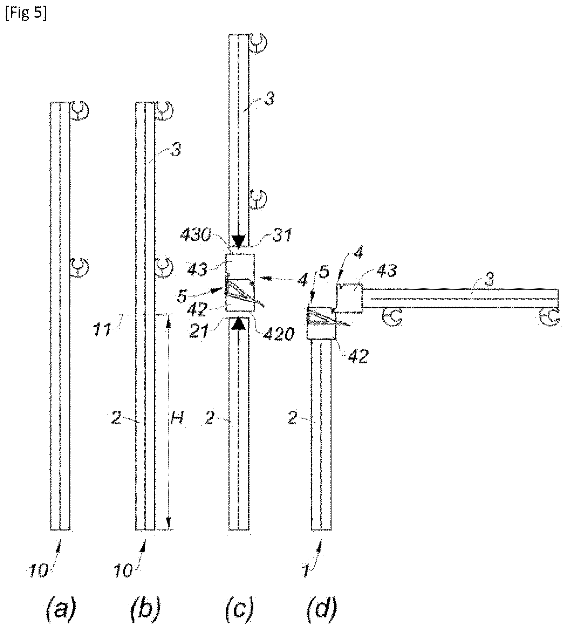

En référence à la Figure 5, il est possible de mettre en œuvre un procédé de modification d'un montant pour garde-corps consistant à modifier un montant non rabattable 10 (illustré en Figure 5(a)) pour en faire un montant rabattable 1 (illustré en Figure 5(d)) comme précédemment décrit.

Pour ce faire, le procédé de modification utilise un système d'articulation 4 comme précédemment décrit, et met en œuvre les étapes suivantes :
- comme illustré en Figure 5(b), sectionner le montant non rabattable 10 selon une ligne de sectionnement 11 située à une hauteur H voulue, afin de séparer une section inférieure de montant 2 d'une section supérieure de montant 3 ;
- comme illustré en Figure 5(c), insérer une extrémité supérieure sectionnée 21 de la section inférieure de montant 2 à l'intérieur de la cavité inférieure 420 du charnon fixe 42, et fixer cette extrémité supérieure sectionnée 21 à l'intérieur de la cavité inférieure 420, par exemple par serrage au moyen des vis de pression 62 précédemment décrites ;
- comme illustré en Figure 5(c), insérer une extrémité inférieure sectionnée 31 de la section supérieure de montant 3 à l'intérieur de la cavité supérieure 430 du charnon mobile 43, et fixer cette extrémité inférieure sectionnée 31 à l'intérieur de la cavité supérieure 430, par exemple par serrage au moyen des vis de pression 63 précédemment décrites.

Ainsi, à l'issue de ce procédé de modification, on obtient un montant rabattable 1 adapté à l'environnement, et en particulier à l'espace disponible pour rabattre la section supérieure de montant 3. A l'exception du sectionnement, aucune autre modification du montant, telle qu'un usinage ou un perçage, n'est nécessaire pour en faire un montant rabattable.

## Revendications

1. Montant rabattable (1) pour garde-corps, ledit montant rabattable (1) comprenant une section supérieure de montant (3) et une section inférieure de montant (2) raccordées bout à bout par un système d'articulation (4) pour permettre un rabattement par pivotement de la section supérieure de montant (3) relativement à la section inférieure de montant (2) ;
ledit système d'articulation (4) comportant :
- un charnon mobile (43) présentant une cavité supérieure (430) à l'intérieur de laquelle est fixée la section supérieure de montant (3),
- un charnon fixe (42) présentant une cavité inférieure (420) à l'intérieur de laquelle est fixée la section inférieure de montant (2), où le charnon mobile (43) est montée mobile en pivotement sur le charnon fixe (42) au moyen d'un organe de liaison (41) définissant un axe de pivotement (40) ;
- un système de verrouillage à levier (5) configurable entre une configuration verrouillée interdisant un pivotement du charnon mobile (43) afin de maintenir alignées la section supérieure de montant (3) et la section inférieure de montant (2) selon un axe de montant (20), et une configuration déverrouillée autorisant un pivotement du charnon mobile (43) relativement au charnon fixe (42) afin de libérer un pivotement de la section supérieure de montant (3) ;
ledit système de verrouillage à levier (5) comprenant :
- un verrou (51) prévu sur l'un du charnon mobile (43) et du charnon fixe (42),
- une poignée (52) montée pivotante sur l'autre du charnon mobile (43) et du charnon fixe (42) selon un axe principal (520),
- un pêne (53) articulé sur la poignée (52) selon un axe secondaire (530) et conformé pour être, par une manœuvre de la poignée (52), soit en prise avec le verrou (51) en configuration verrouillée soit libéré du verrou (51) en configuration déverrouillée.

2. Montant rabattable (1) selon la revendication 1, dans lequel le système d'articulation (4) présente un plan médian (PM) s'étendant parallèlement à l'axe de pivotement (40) et incluant l'axe de montant (20), avec de part et d'autre du plan médian (PM) un côté avant (AV) et un côté arrière (AR), et l'axe de pivotement (40) est situé sur le côté avant (AV) du plan médian (PM) tandis que le verrou (51) est situé sur le côté arrière (AR).

3. Montant rabattable (1) selon la revendication 2, dans lequel le verrou (51) comprend une encoche formée sur l'un du charnon mobile (43) et du charnon fixe (42).

4. Montant rabattable (1) selon l'une quelconque des revendications 2 et 3, dans lequel l'axe principal (520) est situé sur le côté arrière (AR).

5. Montant rabattable (1) selon la revendication 4, dans lequel la poignée (52) comprend deux bras latéraux (522) s'étendant de part et d'autre de l'autre du charnon mobile (43) et du charnon fixe (42) et présentant :
- des extrémités arrière (523) respectives montées pivotantes sur l'autre du charnon mobile (43) et du charnon fixe (42) selon l'axe principal (520), et
- des extrémités avant respectives jointes par une barre de manipulation (524) située sur le côté avant (AV) en regard de l'autre du charnon mobile (43) et du charnon fixe (42).

6. Montant rabattable (1) selon la revendication 5, dans lequel le pêne (53) est formé d'une pièce en forme générale de « U » comprenant deux tiges latérales (532) s'étendant de part et d'autre de l'autre du charnon mobile (43) et du charnon fixe (42) et présentant :
- des premières extrémités respectives montées pivotantes sur les bras latéraux (522) respectifs de la poignée (52) selon l'axe secondaire (530), et
- des secondes extrémités respectives jointes par une tige de verrouillage (531) située sur le côté arrière (AR) et propre à venir en prise avec le verrou (51).

7. Montant rabattable (1) selon l'une quelconque des revendications 1 à 6, dans lequel l'axe principal (520) et l'axe secondaire (530) sont parallèles à l'axe de pivotement (40).

8. Montant rabattable (1) selon l'une quelconque des revendications 1 à 7, dans lequel la section supérieure de montant (3) est fixée par serrage dans la cavité supérieure (430), par exemple au moyen d'au moins une vis de pression (63) traversant le charnon mobile (43) pour presser la section supérieure de montant (3).

9. Montant rabattable (1) selon l'une quelconque des revendications 1 à 8, dans lequel la section inférieure de montant (2) est fixée par serrage dans la cavité inférieure (420), par exemple au moyen d'au moins une vis de pression (62) traversant le charnon fixe (42) pour presser la section inférieure de montant (2).

10. Procédé de modification d'un montant pour garde-corps consistant à modifier un montant non rabattable (10) pour en faire un montant rabattable (1) conforme à l'une quelconque des revendications 1 à 9, ledit procédé de modification utilisant un système d'articulation (4) comportant :
- un charnon mobile (43) présentant une cavité supérieure (430),
- un charnon fixe (42) présentant une cavité inférieure (420), où le charnon mobile (43) est montée mobile en pivotement sur le charnon fixe (42) au moyen d'un organe de liaison (41) définissant un axe de montant (20) ;
- un système de verrouillage à levier (5) configurable entre une configuration verrouillée interdisant un pivotement du charnon mobile (43), et une configuration déverrouillée autorisant un pivotement du charnon mobile (43) relativement au charnon fixe (42) ;
et ledit système de verrouillage à levier (5) comprenant :
- un verrou (51) prévu sur l'un du charnon mobile (43) et du charnon fixe (42),
- une poignée (52) montée pivotante sur l'autre du charnon mobile (43) et du charnon fixe (42) selon un axe principal (520),
- un pêne (53) articulé sur la poignée (52) selon un axe secondaire (530) et conformé pour, par une manoeuvre de la poignée (52), être en prise avec le verrou (51) en configuration déverrouillée ou être libéré du verrou (51) en configuration déverrouillée ;
ledit procédé de modification comprenant les étape suivantes :
- sectionner le montant non rabattable (10) à une hauteur (H) voulue, afin de séparer une section inférieure de montant (2) d'une section supérieure de montant (3) ;
- fixer une extrémité supérieure sectionnée (21) de la section inférieure de montant (2) à l'intérieur de la cavité inférieure (420) du charnon fixe (42) ;
- fixer une extrémité inférieure sectionnée (31) de la section supérieure de montant (3) à l'intérieur de la cavité supérieure (430) du charnon mobile (43).

11. Procédé de modification selon la revendication 10, dans lequel l'extrémité supérieure sectionnée (21) de la section inférieure de montant (2) est fixée par serrage à l'intérieur de la cavité inférieure (420), par exemple au moyen d'au moins une vis de pression (62) traversant le charnon fixe (42) pour presser la section inférieure de montant (2).

12. Procédé de modification selon l'une quelconque des revendications 10 et 11, dans lequel l'extrémité inférieure sectionnée (31) de la section supérieure de montant (3) est fixée par serrage à l'intérieur de la cavité supérieure (430), par exemple au moyen d'au moins une vis de pression (63) traversant le charnon mobile (43) pour presser la section supérieure de montant (3).
